# DEMANDE DE BREVET EUROPEEN

(11) **EP 3 546 302 A1**
(43) Date de publication de la demande: **02.10.2019**
(21) Numéro de dépôt: 19160782.9
(22) Date de dépôt: 05.03.2019
(51) Int. Cl.: B60S 1/38, C08L 7/00, C08K 5/14, C08L 23/16

(54) **LAME D'ESSUYAGE POUR BALAI D'ESSUIE-GLACE**

(30) Priorité: 28.03.2018 FR 1852676
(71) Demandeur: Valeo Systèmes d'Essuyage, 78322 Le Mesnil Saint Denis (FR)
(72) Inventeur: ASSUID, Patrick, 63500 ISSOIRE (FR)
(74) Mandataire: Valeo Systèmes d'Essuyage

(57) **Abrégé**

L'invention concerne un balai d'essuie-glace, au moins une partie de ladite lame (1) comprenant un matériau à base de caoutchouc naturel, d'éthylène-propylène-diène monomère (EPDM) et d'au moins un additif, caractérisée en ce que l'EPDM est au moins en partie bio-sourcé, l'additif est un système de vulcanisation à base d'un peroxyde et ledit matériau est exempt d'oxyde de zinc. L'invention concerne aussi un balai d'essuie-glace comprenant une telle lame d'essuyage et un système d'essuyage comprenant un tel balai d'essuie-glace.

## Description

### DOMAINE DE L'INVENTION

La présente invention a pour objet une lame d'essuyage pour un balai d'essuie-glace, notamment une lame d'essuyage en matériau d'origine bio-sourcée.

### ETAT DE LA TECHNIQUE

Les véhicules automobiles sont couramment équipés de systèmes d'essuie-glace pour assurer un lavage et/ou essuyage du pare-brise et éviter que la vision qu'a le conducteur de son environnement ne soit perturbée. Les balais d'essuie-glace d'un tel système sont classiquement entraînés par des bras effectuant un mouvement angulaire de va-et-vient. Ces lames frottent contre la surface extérieure de la vitre, par exemple du pare-brise, et évacuent l'eau en l'amenant en dehors du champ de vision du conducteur. Dans une version classique, les balais sont réalisés sous la forme de palonniers articulés qui tiennent la lame d'essuyage en plusieurs points. Dans une version plus récente dénommée "flat blade" (pour "balai plat"), les balais sont réalisés sous la forme d'un ensemble semi-rigide qui maintient la lame d'essuyage sur toute sa longueur.

De manière générale, une lame d'essuyage est réalisée en matériau déformable élastiquement à base d'un élastomère complété d'additifs, notamment pour en améliorer les propriétés mécaniques, l'élasticité, la résistance à l'usure, aux agressions extérieures ou encore faciliter la mise en oeuvre du procédé de fabrication. Il peut par exemple s'agir de charges de renfort, de plastifiant, d'agent de vulcanisation, d'agent de protection contre les rayonnement UV, l'oxydation, l'ozone et/ou l'usure.

Aussi bien l'élastomère que les additifs sont dans la plupart des cas des produits issus de la pétrochimie. Néanmoins, la volonté grandissante de préserver l'environnement et de réduire les émissions de CO₂, conduit à limiter l'utilisation de tels produits issus de la pétrochimie.

Dans le domaine de l'industrie du caoutchouc, il est possible d'utiliser le caoutchouc naturel comme élastomère de base qui est très performant du point de vue de son élasticité et de ses propriétés mécaniques intrinsèques. Le caoutchouc naturel est issu de l'hévéaculture, ce qui en fait une matière bio-sourcée. Associé à des charges et des plastifiants bio-sourcés, l'utilisation de caoutchouc naturel permet de réduire considérablement le taux de matières issues de la pétrochimie.

Cependant, l'utilisation de caoutchouc naturel implique l'utilisation d'un système de vulcanisation à base de souffre impliquant l'utilisation d'additifs connus pour leur nocivité. Par exemple, la vulcanisation au souffre implique l'utilisation de l'oxyde de zinc (ZnO) comme activateur de vulcanisation et reconnu comme un polluant du milieu aquatique ou encore l'utilisation d'accélérateurs issus de la chimie des pesticides et de niveau de toxicité non négligeable. De plus, l'utilisation d'accélérateurs entraîne la formation de nitrosamines connues pour leur pouvoir cancérogène.

Par ailleurs, des agents de protection contre le rayonnement UV, l'oxydation, l'ozone et/ou l'usure sont classiquement utilisés pour augmenter la résistance du produit final. Dans des produits à base de caoutchouc naturel, on utilise généralement comme agent de protection le para-phénylènediamine qui est aussi connu pour ses caractéristiques allergisantes et irritantes.
Ainsi, même si le matériau est majoritairement à base de composants bio-sourcés, la nocivité et l'aspect écologique restent contestables de par l'utilisation des additifs.

Il existe donc un besoin de disposer d'une lame d'essuyage faite d'un matériau ne rencontrant pas ces inconvénients.

### RESUME DE L'INVENTION

L'invention propose à cet effet une lame d'essuyage pour balai d'essuie-glace, au moins une partie de ladite lame comprenant un matériau à base de caoutchouc naturel, d'éthylène-propylène-diène monomère (EPDM) et d'au moins un additif. L'EPDM est au moins en partie bio-sourcé, l'additif est un système de vulcanisation à base d'un peroxyde et ledit matériau est exempt d'oxyde de zinc.

Au sens de la présente invention, le terme « bio-sourcé » désigne un produit qui n'est pas d'origine fossile mais est obtenu à partir de ressources renouvelables. Le cas échéant, il désigne aussi un procédé biologique. On entend par « d'origine fossile », tout produit issu du pétrole ou du charbon ou des dérivés du pétrole ou du charbon, notamment les produits combustibles traditionnels issus de la pétrochimie.

Conformément à l'invention, l'utilisation d'un matériau à base de caoutchouc naturel et d'EPDM au moins en partie bio-sourcé dans la lame d'essuyage permet de s'affranchir dans une plus grande mesure de l'utilisation de produits toxiques et/ou nocifs notamment pour l'environnement. On obtient ainsi une lame d'essuyage plus écologique, plus simple à fabriquer, et dont les propriétés mécaniques et physiques sont adaptées à l'essuyage d'une vitre de véhicule automobile.

Selon différents modes de réalisation de l'invention, qui pourront être mis en oeuvre ensemble ou séparément :
- l'EPDM comprend jusqu'à 70% (pce) d'éthylène bio-sourcé, de préférence entre 40 et 60 %,
- l'éthylène bio-sourcé est produit à partir d'éthanol obtenu à partir d'au moins une matière végétale,
- la matière végétale est choisie parmi la canne à sucre, la betterave, un végétal ligneux ou un mélange de ceux-ci,
- la lame d'essuyage comprend comme seuls caoutchoucs du caoutchouc naturel et de l'EPDM au moins en partie bio-sourcé,
- le matériau est un mélange 70/30 (pce) de caoutchouc naturel et d'EPDM au moins en partie bio-sourcé,
- le caoutchouc naturel est à l'état vulcanisé,
- le caoutchouc vulcanisé est obtenu par vulcanisation d'un caoutchouc naturel non-fonctionnalisé,
- le caoutchouc naturel est un seul grade de caoutchouc naturel, tel que du caoutchouc TSR 10 ou 20, de préférence du caoutchouc TSR 20,
- ledit matériau est exempt d'agent de protection contre le rayonnement UV à base de para-phénylènediamine,
- ledit matériau est exempt de nitrosamines,
- ledit matériau est exempt d'accélérateurs générateurs de nitrosamines,
- ledit additif est en outre un plastifiant bio-sourcé,
- le plastifiant est une huile bio-sourcée,
- ladite huile bio-sourcée est choisie parmi les huiles et/ou graisses végétales, les huiles et/ou graisses animales, ou un mélange de celles-ci,
- la différence entre le paramètre de solubilité de ladite huile bio-sourcée et le paramètre de solubilité dudit caoutchouc naturel et de l'EPDM bio-sourcé, mesurée en (cal/cm³)^{1/2} est inférieure ou égale à 2 (cal/cm³)^{1/2},
- le paramètre de solubilité de ladite huile bio-sourcée est compris entre 7 et 10 (cal/cm³)^{1/2}, de préférence compris entre 8 et 9 (cal/cm³)^{1/2}, et plus préférablement compris entre 8,2 et 8, 4 (cal/cm³)^{1/2},
- ledit additif est en outre une charge de renfort naturelle,
- ledit additif est en outre une charge de renfort bio-sourcée,
- ladite charge de renfort naturelle est choisie parmi une charge minérale, des fibres de bois, la cellulose, des diatomées, ou un mélange de ceux-ci,
- ladite charge minérale est un silicate d'aluminium,
- entre 85 et 95% en poids dudit matériau est d'origine bio-sourcée, de préférence entre 90 et 95%,
- ladite partie de lame comprenant ledit matériau est un corps de base de ladite lame.

L'invention concerne encore un balai d'essuie-glace comprenant au moins une lame d'essuyage selon l'invention.

L'invention concerne enfin un système d'essuyage comprenant au moins un balai d'essuie-glace selon l'invention.

### PRESENTATION DES FIGURES

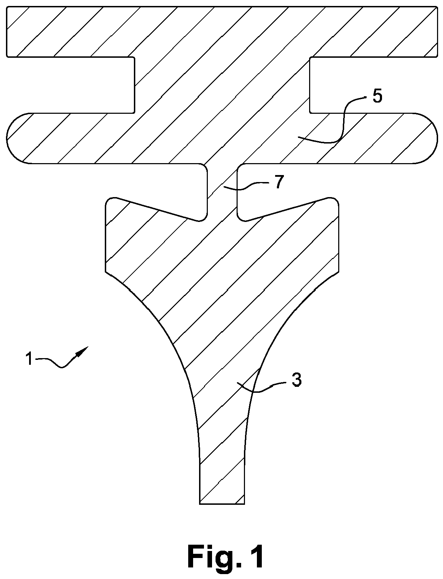

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence à la figure 1 annexée qui est une vue schématique en coupe d'une lame d'essuyage selon un mode de réalisation de l'invention.

### DESCRIPTION DETAILLEE

La lame 1 d'essuyage conforme à l'invention comprend un matériau exempt d'oxyde de zinc et à base :
- de caoutchouc naturel,
- d'éthylène-propylène-diène monomère (EPDM) au moins en partie bio-sourcé, et
- d'au moins un additif qui est un système de vulcanisation à base d'un peroxyde.

De préférence, la lame d'essuyage comprend comme seuls caoutchoucs du caoutchouc naturel et de l'EPDM au moins en partie bio-sourcé. En particulier, le matériau est un mélange 70/30 (pce) de caoutchouc naturel et d'EPDM au moins en partie bio-sourcé.

De façon avantageuse, l'EPDM au moins en partie bio-sourcé comprend jusqu'à 70% (pce) d'éthylène bio-sourcé, de préférence entre 40 et 60 % (pce). L'éthylène bio-sourcé peut être produit à partir d'éthanol obtenu à partir d'au moins une matière végétale. La matière végétale est choisie parmi la canne à sucre, la betterave, un végétal ligneux ou un mélange de ceux-ci.
Le contenu bio-sourcé d'un produit et/ou d'un matériau peut être mesuré en utilisant les normes ASTM6866, ISO 16620-2 et CEN 16640, notamment les normes ASTM D6866-16, ISO 16620-2:2015 et EN 16640:2017. Ces normes spécifient des méthodes de calcul basées sur la mesure du taux de ¹⁴C. Le taux de ¹⁴C permet de déterminer la teneur en carbone bio-sourcé du produit et/ou du matériau.

De préférence, le caoutchouc naturel est un caoutchouc naturel à l'état vulcanisé, ledit caoutchouc vulcanisé étant obtenu par vulcanisation d'un caoutchouc naturel non-fonctionnalisé. Il peut s'agir par exemple, d'un seul grade de caoutchouc naturel, tel que du caoutchouc TSR 10 ou 20, de préférence le caoutchouc TSR 20.
Au sens de la présente invention, les termes « non-fonctionnalisé » doivent être compris en ce sens que les chaînes de polymère qui forment ledit caoutchouc naturel n'ont pas été modifiées chimiquement par ajout de fonctions chimiques ou groupements fonctionnels de façon covalente sur lesdites chaînes de polymères.
Le caoutchouc naturel utilisé dans la présente invention peut toutefois faire l'objet, avant les opérations de vulcanisation et de cuisson, d'une ou plusieurs étapes de purification visant à retirer les impuretés organiques (notamment végétales) et minérales du caoutchouc naturel, qui proviennent pour la plupart du suc végétal duquel est obtenu ledit caoutchouc naturel.
L'utilisation de caoutchouc naturel non-fonctionnalisé permet d'obtenir une lame d'essuyage aux propriétés mécaniques et physiques adéquates, sans qu'il soit nécessaire d'avoir recours - préalablement à la vulcanisation et à la cuisson du caoutchouc - à des traitements de fonctionnalisation du ou des caoutchoucs employés pour former la lame d'essuyage.

Non seulement, l'EPDM est au moins en partie d'origine bio-sourcée et permet de réduire le taux de matière issues de la pétrochimie, mais, sa présence permet aussi de s'affranchir de l'utilisation d'additifs non bio-sourcés, voire toxiques et nocifs pour la santé et l'environnement, tels que des accélérateurs de vulcanisation, des agents de protection.

Ainsi, la présence d'EPDM permet de s'affranchir de l'utilisation d'un système de vulcanisation classique à base de soufre. On s'affranchit ainsi de l'utilisation de composants issus de la famille des pesticides, notamment d'accélérateurs de vulcanisation générateur de nitrosamines et d'oxyde de zinc.
De façon avantageuse, le système de vulcanisation est à base d'un peroxyde. Il peut s'agir, par exemple, de 2,5-bis(*tert*-butylperoxy)-2,5-diméthylhexane (DBPH, numéro de CAS 78-63-7), de 1,1-di(*tert*-butylperoxy)-3,3,5-triméthylcyclohexane (TMC), de peroxyde de dicumyle (DCP), de bis(*tert-*butyldioxyisopropyl)benzène (DBDB ou VC). De préférence, il s'agit du DBPH.

L'EPDM jouant aussi un rôle d'agent de protection contre les rayonnements UV, contre l'oxydation et contre l'ozone, sa présence permet de s'affranchir d'agents de protection tels que des agents antioxydant, anti-UV, anti-ozone. On peut ainsi s'affranchir de composants tels que les diphényle amines ou les paraphénylènediamines.

L'additif peut en outre être un plastifiant bio-sourcé.
Un plastifiant est un composant permettant de rendre le matériau plus souple et/ou plus facile à mettre en oeuvre.
L'utilisation de produits bio-sourcés comme plastifiants permet d'améliorer les propriétés du caoutchouc naturel et d'EPDM en partie d'origine bio-sourcée tout en augmentant la proportion de produits bio-sourcés dans le matériau. Notamment, les plastifiants rendent le matériau plus facile à manipuler et facilitent sa mise en oeuvre dans un procédé de fabrication industrielle.
De manière générale, les plastifiants sont souvent des huiles. L'invention propose d'utiliser en particulier des huiles bio-sourcées.
L'huile bio-sourcée est choisie de manière à ce que la différence entre le paramètre de solubilité de l'huile bio-sourcée mesuré en (cal/cm³)^{1/2} et le paramètre de solubilité du mélange de caoutchoucs, ici un mélange de caoutchouc naturel et d'EPDM en partie d'origine bio-sourcée est inférieure ou égale à 2 (cal/cm³)^{1/2}, voire inférieure ou égale à 1,5 (cal/cm³)^{1/2}, voire inférieure ou égale à 1 (cal/cm³)^{1/2}, voire inférieure ou égale à 0,5 (cal/cm³)^{1/2}.
Autrement dit, le paramètre de solubilité de l'huile bio-sourcée est proche du paramètre de solubilité du mélange de caoutchoucs. Cela assure que l'huile bio-sourcée (ou un mélange d'huiles bio-sourcées) choisie est compatible et a une bonne affinité avec le mélange de caoutchoucs, c'est à dire que l'huile va se mélanger correctement avec ce mélange de caoutchoucs.
Ainsi, le paramètre de solubilité de l'huile bio-sourcée est compris entre 7 et 10 (cal/cm³)^{1/2}, de préférence compris entre 8 et 9 (cal/cm³)^{1/2}.
L'huile bio-sourcée est par exemple choisie parmi les huiles et/ou les graisses végétales mais aussi parmi les huiles et/ou les graisses animales, ou un mélange de celles-ci.
De façon avantageuse l'huile et/ou graisse végétale est choisie parmi l'huile de tournesol, l'huile d'olive, l'huile de colza, l'huile de lin, l'huile de noix de coco, l'huile de ricin, l'huile de soja. De préférence, il s'agit d'un mélange d'huile de tournesol et d'huile de colza.
L'huile et/ou graisse animale est par exemple choisie parmi les huiles de poisson.
Ces huiles bio-sourcées sont connues pour avoir un paramètre de solubilité compris entre 8,2 et 8,4 (cal/cm³)^{1/2}. A titre d'exemple, des paramètres de solubilité pour une sélection d'huiles sont donnés dans le tableau suivant :

| | |
|---|---|
| huile de tournesol | 8,2 (cal/cm³)^{1/2} |
| huile d'olive | 8,4 (cal/cm³)^{1/2} |
| huile de colza | 8,3 (cal/cm³)^{1/2} |
| huile de lin | 8,4 (cal/cm³)^{1/2} |
| huile de noix de coco | 8,4 (cal/cm³)^{1/2} |

Conformément à l'invention, l'utilisation de caoutchouc naturel et d'EPDM au moins en partie bio-sourcé, en combinaison avec une ou plusieurs huiles bio-sourcées qui présentent un paramètre de solubilité compris entre 8,2 et 8,4 (cal/cm³)^{1/2}, permet d'obtenir une lame d'essuyage écologique, simple à fabriquer, et dont les propriétés mécaniques et physiques sont très adaptées à l'essuyage d'une vitre de véhicule automobile.

Le matériau comprend en outre comme additif une charge de renfort naturelle, voire bio-sourcée.
La charge de renfort permet d'améliorer les propriétés mécaniques du caoutchouc. Notamment elle permet d'améliorer la résistance à la rupture et/ou la performance d'abrasion de la lame 1 d'essuyage.
On entend par « naturelle » un composant produit par la nature.
La charge de renfort naturelle est par exemple choisie parmi une charge minérale, des fibres de bois, la cellulose, des diatomées, ou un mélange de ceux-ci. De préférence, il s'agit d'un mélange de charge minérale et de fibres de bois.
Ces types de charges de renfort permettent d'améliorer les propriétés mécaniques du mélange de caoutchoucs, tout en limitant l'utilisation du noir de carbone d'origine non bio-sourcé qui est classiquement utilisé comme charge de renfort des élastomères dans le domaine des véhicules automobiles.
La charge minérale est de préférence un silicate d'aluminium, tel qu'un kaolin. On entend par kaolin, une espèce minérale riche en silicates d'aluminium, en particulier en silicates d'aluminium hydratés tel que la kaolinite. Il peut aussi s'agir de kaolin calciné.

De façon avantageuse, le matériau comprend :
- entre 30 et 45 % en poids de caoutchouc naturel, de préférence entre 35 et 40 % en poids,
- entre 10 et 20% en poids d'EPDM au moins en partie bio-sourcé, de préférence entre 15 et 20 % en poids,
- entre 35 et 55% en poids de charge de renfort naturelle, de préférence entre 40 et 45% en poids, et
- entre 1 et 10% en poids de plastifiant bio-sourcé, de préférence entre 2 et 5 % en poids.

Le matériau peut aussi comprendre d'autres additifs qui sont généralement connus de l'homme du métier, notamment pour améliorer les propriétés mécaniques, l'élasticité, la résistance à l'usure, aux agressions extérieures ou encore améliorer la mise en oeuvre du procédé.
Il peut s'agir d'au moins un agent de vulcanisation, d'au moins un agent de protection contre le rayonnement UV, l'oxydation, l'ozone et/ou l'usure par exemple. Les additifs sont d'origine bio-sourcée de manière que plus de 90% en poids du matériau soit d'origine bio-sourcée, de préférence plus de 95% en poids, voire plus de 96% en poids.
Autrement dit, moins de 10% en poids du matériau est d'origine non bio-sourcée, de préférence moins de 5% en poids, voire moins de 4% en poids.

Selon la figure 1, la lame 1 d'essuyage d'un balai d'essuie-glace conforme à l'invention présente une forme allongée et est destinée à être portée par un corps du balai (non représenté). La lame 1 comprend une lèvre 3 et un talon 5 qui sont reliés par une charnière 7. L'ensemble lèvre 3, talon 5, charnière 7 forme un corps de base de la lame 1.

Le talon 5 permet d'accrocher la lame 1 dans le corps du balai. La lèvre 3 est destinée à être au contact de la surface extérieure d'une vitre telle qu'un pare-brise en vue de son essuyage.

La charnière 7 est formée par une fine bande de matière qui confère à la lame une certaine flexibilité et autorise un basculement de celle-ci lors d'un changement de direction de déplacement du balai, autrement dit un mouvement de bascule d'avant en arrière de la lèvre.

La lame 1 est obtenue par un procédé de fabrication classique connu de l'Homme du métier.
De façon avantageuse, au moins une partie de la lame 1 comprend le matériau tel que décrit précédemment, notamment le corps de base de la lame comprend ce matériau. On peut ainsi envisager des modes de réalisations dans lesquels, par exemple :
- seule la lèvre 3 comprend le matériau,
- seul le talon 5 comprend le matériau,
- toute la lame 1 comprend le matériau.
Si nécessaire, tout ou partie de la surface de la lame 1 peut aussi être traitée de manière à modifier celle-ci, par exemple par graphitisation, traitement plasma, halogénation, implantation ionique et/ou dépôt d'un revêtement. Un tel traitement permet de renforcer les propriétés mécaniques, d'essuyage et/ou de résistance à l'usure de la lame.
La lame 1 d'essuyage peut ainsi comprendre un revêtement de type monocouche ou multicouche. Le revêtement recouvre le corps de base de la lame 1.

### EXEMPLE

Un exemple de formulation de matériau utilisé pour la fabrication d'une lame 1 d'essuyage conforme à l'invention est donné ici à titre illustratif, l'invention ne se limitant nullement à celui-ci. Les unités sont en pce (partie pour cent d'élastomère ou phr pour *parts per hundred of rubber* en anglais).

| **Formulation** | **pce** |
|---|---|
| Caoutchouc naturel | 70 |
| EPDM au moins en partie bio-sourcé | 30 |
| Charge minérale | 80 |
| Huile de colza | 5 |
| Antioxydant | 0,7 |
| Oxyde de calcium | 5 |
| Promoteur de traitement/agent anti-dispersant | 2 |
| DBPH | 4,5 |

L'élastomère utilisé ici est un mélange 70/30 de caoutchouc naturel et d'EPDM au moins en partie bio-sourcé. L'EPDM au moins en partie bio-sourcé est ici du Keltan® ECO 6950 commercialisé par la société Lanxess.
La charge minérales utilisée dans cet exemple est un kaolin, notamment un kaolin Metasial® vendu par la société Soka, plus précisément le kaolin Metasial® VS Z.
L'antioxydant utilisé dans cet exemple est du 2,2,4-Triméthyl-1,2-dihydroquinoline.
Le promoteur de traitement/agent anti-dispersant est un mélange d'alcool gras, d'acide gras et d'ester d'acides gras, tel que l'Aflux® 42 commercialisé par la société Lanxess.

La cinétique de vulcanisation de cet exemple de matériau a été étudiée. Les mesures ont été réalisées selon la norme ISO 3417. Les résultats sont les suivants :

| **Propriétés de vulcanisation** | |
|---|---|
| S'mini | 1,9 dNm |
| S'maxi | 16 dNm |
| tₛ₂ | 0,34 min |
| t₉₀ | 1,18 min |
| **Vulcanisation** | 1,7 min à 200 °C |

La vulcanisation se fait en 1,7 minute à 200 °C. Le temps de cuisson est donc court et permet d'offrir un bon niveau de productivité en fabrication.
Le temps de grillage (*scortch* t5 en anglais) à 121 °C est de 16,5 minutes. Il a été mesuré selon la norme ISO 289-Partie 2. Ce temps de grillage permet une bonne sécurité de mise en oeuvre.

La viscosité Mooney de ce matériau a aussi été mesurée selon la norme ISO 289. Elle est de 50 unités Mooney. D'un point de vue de la mise en oeuvre, le matériau est utilisable pour un procédé industriel par moulage ou par extrusion.

Des essais ont par ailleurs été effectués pour tester les propriétés de ce matériau, notamment les propriétés mécaniques.

La dureté initiale du matériau est de 62 DIDC (degrés internationaux de dureté du caoutchouc) mesurée selon les normes ISO 48 et ISO 188 avec une variation de la dureté de -4 DIDC après 7 jours de vieillissement à 85 °C. La dureté est de 61 Shore A mesurée selon la norme ISO 868.

Les mesures de résistance à la traction ou essai de traction (*tensile test* en anglais) ont été réalisées selon la norme ISO 37 à 500 mm/min. Les résultats sont résumés dans le tableau ci-dessous :

| **Propriétés initiales** | |
|---|---|
| Contrainte de traction à 100% ou Modulus 100% | 4,0 MPa |
| Contrainte de traction à 50% ou Modulus 50% | 4,0 MPa |
| Contrainte de traction à 25% ou Modulus 25% | 1,9 MPa |
| Résistance à la rupture | 10 MPa |
| Allongement à la rupture | 250% |

L'allongement du matériau soumis à une élongation de 50% après 22 heures à 70 °C (*50% elongation set en* anglais) est de 11%. Il a été mesuré selon la norme ISO 2285.

L'élasticité est de 67%. L'élasticité a été mesurée selon la norme DIN53512 et l'effet d'hystérésis a été déterminé selon la norme NF-T 46002.

Ces propriétés sont du niveau de celles d'un matériau classique d'origine non bio-sourcée, notamment à base d'EPDM classique issu de la pétrochimie ou d'un matériau à base uniquement de caoutchouc naturel ou encore de matériau à base de noir de carbone comme charge de renfort, et de plastifiants non bio-sourcés.

Ainsi, dans cet exemple, l'association d'un EPDM au moins en partie bio-sourcé à du caoutchouc naturel permet de s'affranchir de produits nocifs notamment pour la vulcanisation et pour prolonger la durée de vie de la lame d'essuyage.

De plus, ce mélange comprend aussi une charge de renfort minérale en remplacement du noir de carbone classique et un plastifiant bio-sourcé.
On obtient ainsi un matériau comprenant non seulement moins de 5% en poids d'additifs non bio-sourcés mais également affranchi de produits nocifs, tout en conservant les propriétés mécaniques nécessaires pour être utilisé dans la fabrication de lame d'essuyage.

Il est à noter que des variantes de réalisation sont bien sûr possibles et que la présente invention ne se limite pas seulement à des lames d'essuyage comprenant le matériau de formulation donnée en exemple.

## Revendications

1. Lame d'essuyage (1) pour balai d'essuie-glace, au moins une partie de ladite lame (1) comprenant un matériau à base de caoutchouc naturel, d'éthylène-propylène-diène monomère (EPDM) et d'au moins un additif, **caractérisée en ce que** l'EPDM est au moins en partie bio-sourcé, l'additif est un système de vulcanisation à base d'un peroxyde et ledit matériau est exempt d'oxyde de zinc.

2. Lame d'essuyage (1) selon la revendication précédente, dans laquelle l'EPDM comprend jusqu'à 70% d'éthylène bio-sourcé.

3. Lame d'essuyage (1) selon la revendication précédente, dans laquelle l'éthylène bio-sourcé est produit à partir d'éthanol obtenu à partir d'au moins une matière végétale.

4. Lame d'essuyage (1) selon l'une quelconque des revendications précédentes, comprenant comme seuls caoutchoucs le caoutchouc naturel et de l'EPDM au moins en partie bio-sourcé.

5. Lame d'essuyage (1) selon l'une quelconque des revendications précédentes, dans laquelle ledit matériau est exempt d'agent de protection contre le rayonnement UV à base de para-phénylènediamine.

6. Lame d'essuyage (1) selon l'une quelconque des revendications précédentes, dans laquelle ledit matériau est exempt d'accélérateurs générateurs de nitrosamines.

7. Lame d'essuyage (1) selon l'une quelconque des revendications précédentes, dans laquelle ledit additif est en outre un plastifiant bio-sourcé.

8. Lame d'essuyage (1) selon la revendication précédente, dans laquelle le plastifiant est une huile bio-sourcée.

9. Lame d'essuyage (1) selon l'une quelconque des revendications précédentes, dans laquelle ladite huile bio-sourcée est choisie parmi les huiles et/ou graisses végétales, les huiles et/ou graisses animales, ou un mélange de celles-ci.

10. Lame d'essuyage (1) selon l'une quelconque des revendications précédentes, dans laquelle ledit additif est en outre une charge de renfort naturelle.
